# EUROPEAN PATENT SPECIFICATION

(11) **EP 2 867 950 B1**
(45) Date of publication and mention of the grant of the patent: **01.06.2016**
(21) Application number: 13739497.9
(22) Date of filing: 27.06.2013
(51) Int. Cl.: H01M 10/04, H01M 2/16, H01M 2/18, H01M 10/0587, H01M 10/42, H01M 10/44, H01M 10/615, H01M 2/02

(54) **METHOD OF MANUFACTURING FLAT-TYPE NON-AQUEOUS SECONDARY BATTERY**
VERFAHREN ZUR HERSTELLUNG EINER FLACHEN NICHTWÄSSRIGEN SEKUNDÄRBATTERIE
PROCÉDÉ DE FABRICATION DE BATTERIE SECONDAIRE NON AQUEUSE ET DE TYPE PLAT

(30) Priority: 29.06.2012 JP 2012147907
(43) Date of publication of application: 06.05.2015
(73) Proprietor: Toyota Jidosha Kabushiki Kaisha, Toyota-shi, Aichi-ken, 471-8571 (JP); Nachi-Fujikoshi Corp., Toyama-shi Toyama 930-8511 (JP)
(72) Inventor: KOBAYASHI, Kiwamu, Toyota-shi, Aichi-ken 471-8571 (JP); MATSUYAMA, Yoshio, Toyota-shi, Aichi-ken 471-8571 (JP); MORI, Hideto, Toyota-shi, Aichi-ken 471-8571 (JP); FURUTA, Tomoyasu, Toyama-Shi, Toyama 930-8511 (JP)
(74) Representative: Intès, Didier Gérard André
(86) International application number: PCT/IB2013/001371
(87) International publication number: WO 2014/001887

(56) References cited:
- EP-A1- 2 439 807
- WO-A1-2008/050211
- JP-A- 2000 340 262
- US-A1- 2008 241 687
- US-A1- 2011 091 755
- US-A1- 2011 111 275

## Description

### BACKGROUND OF THE INVENTION

### 1. Field of the Invention

The invention relates to a method of manufacturing a non-aqueous electrolyte secondary battery.

### 2. Description of Related Art

Conventionally, there has been widely known a non-aqueous electrolyte secondary battery that is equipped with a flat electrode body that is fabricated by stacking a pair of electrodes (a positive electrode and a negative electrode) formed in a sheet-like shape via a separator and winding them, and with a case that substantially assumes the shape of a rectangular parallelepiped and accommodates the electrode body as well as an electrolytic solution.

In general, the non-aqueous electrolyte secondary battery as described above is subjected to an initial charging process in which the battery is initially charged while being bound, a high-temperature aging process in which the battery that has been subjected to the initial charging process is maintained for a predetermined period at a high temperature (e.g., at a temperature equal to or higher than 60°C) while being bound, and the like to become a final product (e.g., see Japanese Patent Application Publication No. 2000-346262 (JP-2000-340262 A)). US2011/0091755 also discloses a method of manufacturing a non-aqueous electrolyte secondary battery of the prior art. However, in the case where the electrode body of the non-aqueous electrolyte secondary battery assumes a certain structure, the electrode body is highly likely to be short-circuited at a specific position thereof when the non-aqueous electrolyte secondary battery is subjected to the high-temperature aging process.

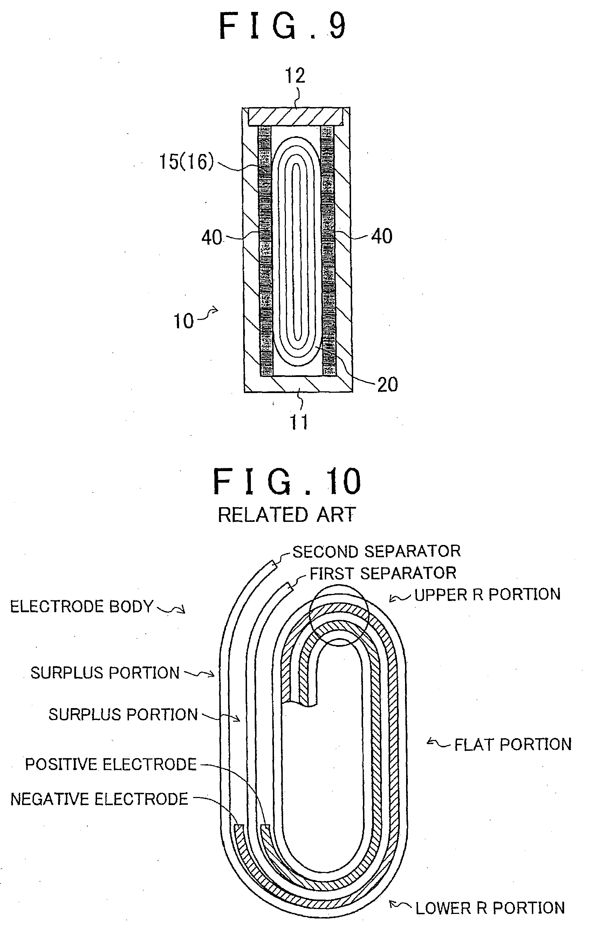

A battery that is highly likely to be short-circuited in the case of being subjected to a high-temperature aging process (hereinafter referred to as "a defective battery") will be described hereinafter with reference to FIGS. 10 to 14.

As shown in FIG. 10, an electrode body of the defective battery is flatly formed in such a manner as to have an upper R portion as an upper curved region, a lower R portion as a lower curved region, and a flat portion that continues to the upper R portion and the lower R portion. The electrode body of the defective battery is equipped with a positive electrode, a negative electrode that is located outside the positive electrode, a first separator, and a second separator that is located outside the first separator and the negative electrode. In the electrode body of the defective battery, the negative electrode as one of the positive electrode and the negative electrode is arranged at an outermost periphery, and an outermost peripheral region of the negative electrode is covered at least with the second separator.

In the electrode body of the defective battery, the length of each of the separators in the winding direction thereof is longer than the length of the pair of the electrodes in the winding direction thereof. In a terminal end region of each of the separators in the winding direction thereof, there is a surplus portion that is in contact with neither of the electrodes. The surplus portion of each of the separators is located from the flat portion to the upper R portion, instead of being located at the lower R portion.

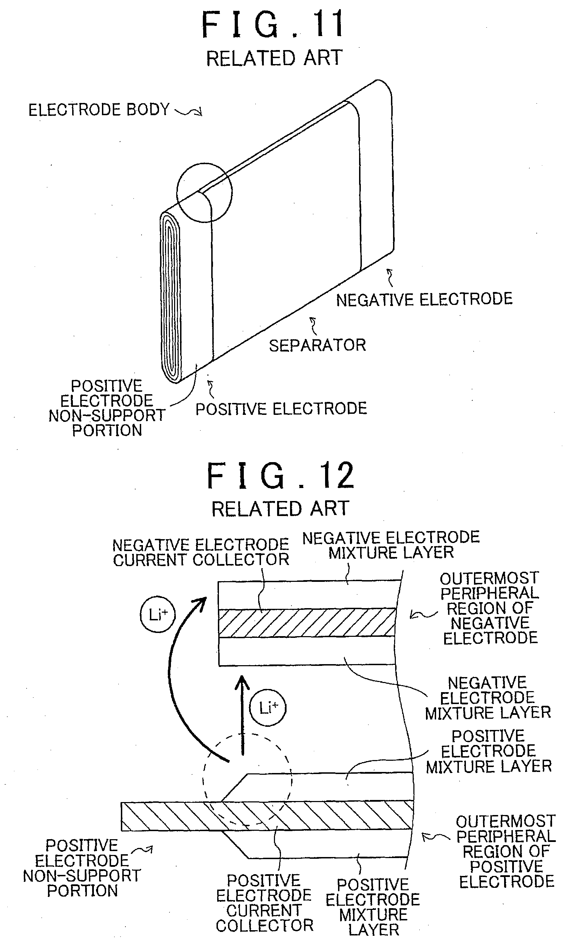

As shown in FIGS. 10 and 11, a terminal end of the surplus portion of the second separator is fixed to a middle portion of the second separator in the winding direction thereof by an adhesive tape or the like at the upper R portion, whereby the electrode body of the defective battery is held in a wound state. Besides, in the electrode body of the defective battery, the positive electrode and the negative electrode are wound in a state of being displaced in the direction of a winding axis with respect to the first separator and the second separator, such that that region of a positive electrode current collector of the positive electrode on which a positive electrode active material is not supported (hereinafter referred to as "a positive electrode non-support portion") and that region of a negative electrode current collector of the negative electrode on which a negative electrode active material is not supported are exposed.

In the defective battery, in the case where the defective battery is subjected to the high-temperature aging process, the following region thereof is highly likely to be short-circuited. That is, the outermost peripheral regions of the pair of the electrodes, namely, those regions which are located on the positive electrode non-support portion side of the upper R portion are short-circuited (see regions surrounded by circles in FIGS. 10 and 11).

The inventor and the like have found out that the surplus portions of the two separators constitute a cause of short-circuiting as a result of scrutinizing the cause of the aforementioned short-circuiting.

As shown in FIG. 12, in the electrode body of the defective battery, there is no opposed positive electrode active material layer in a negative electrode active material layer that is included in "a negative electrode mixture layer" that is formed outside the outermost peripheral region of the negative electrode (the upper negative electrode active material layer in FIG. 12). Thus, in the case where the initial charging process is performed, lithium ions turn around from the positive electrode active material layer that is opposed to the negative electrode active material layer that is included in "the negative electrode mixture layer") that is formed inside the outermost peripheral region of the negative electrode (the lower negative electrode active material layer in FIG. 12) to the negative electrode active material layer that is formed outside the outermost peripheral region of the negative electrode, on the positive electrode non-support portion side of the electrode body of the defective battery. As a result, an excessive amount of lithium ions may be desorbed from the positive electrode active material layer. That is, in the positive electrode active material layer that is opposed to the negative electrode active material layer that is formed inside the outermost peripheral region of the negative electrode, lithium ions in the positive electrode active material layer are pulled out not only from the negative electrode active material layer that is formed inside the outermost peripheral region of the negative material but also from the negative electrode active material layer that is formed outside the outermost peripheral region of the negative electrode. As a result, an excessive amount of lithium ions are desorbed from the positive electrode active material layer. Incidentally, for the convenience of explanation, the regions other than the outermost peripheral region of the positive electrode and the outermost peripheral region of the negative electrode are not shown in FIG. 12.

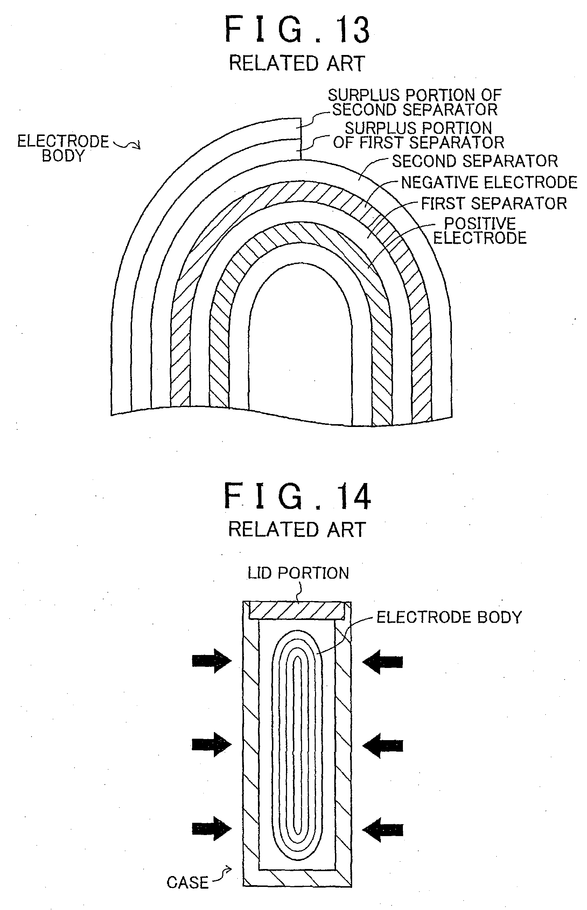

Besides, as shown in FIG. 13, that region of the electrode body of the defective battery in which the surplus portions of the two separators are located assumes a state in which the second separator, the surplus portion of the first separator, and the surplus portion of the second separator are stacked outside the outermost peripheral region of the negative electrode. Therefore, outside the outermost peripheral region of the negative electrode, there is a surplus amount of the electrolytic solution that has penetrated the surplus portions of the two separators. Accordingly, lithium ions are prompted to turn around from the positive electrode active material layer that is opposed to the negative electrode active material layer that is formed inside the outermost peripheral region of the negative electrode to the negative electrode active material layer that is formed outside the outermost peripheral region of the negative electrode (see FIG. 12).

As a result, the positive electrode active material layer from which an excessive amount of lithium ions have been desorbed becomes locally high in potential, and becomes unstable. In the case where the high-temperature aging process is performed in this state, the positive electrode active material is eluted from the unstable positive electrode active material layer, and a metal constituting the positive electrode active material (e.g., Mn, Ni, or Co) is separated out on the negative electrode. As a result, short-circuiting is highly likely to occur.

As described hitherto, it has turned out that the surplus portions of the two separators constitute a cause of short-circuiting. However, although those regions of the electrode body of the defective battery in which the surplus portions of the two separators are located exist in addition to the upper R portion, short-circuiting hardly occurs in the regions other than the upper R portion. In this respect, the inventor and the like have found out that the binding of the defective battery in the initial charging process exerts an influence.

As shown in FIG. 14, in the initial charging process, the defective battery is bound by pressing two wide faces out of four lateral faces of the case through the use of a predetermined binding device, such that the electrode body is pressed. In this manner, the electrode body is pressed via the case, so that the load that is applied to the electrode body changes depending on the state of deformation of the case. That is, since the case differs in deformability depending on the location thereof, the load that is applied to the electrode body is inhomogeneous. A central portion of the case is especially likely to be deformed. Besides, a lower portion of the case is slightly hindered from being deformed by a bottom face of the case. However, the case is generally fabricated through drawing, and is therefore likely to be defomied. However, an upper portion of the case is less likely to be deformed than the other regions, because a lid portion is fixed thereto through welding. Thus, the load that is applied to the electrode body by the upper portion of the case is lower than the load that is applied to the electrode body by the other regions.

When a load that is equal to or higher than a predetermined value is applied to the electrode body, the electrolytic solution is squeezed out from the separators of the electrode body. Therefore, lithium ions are not prompted to turn around from the positive electrode active material layer that is opposed to the negative electrode active material layer that is formed inside the outermost peripheral region of the negative electrode to the negative electrode active material layer that is formed outside the outermost peripheral region of the negative electrode (see FIG. 12), so that short-circuiting does not occur in the regions in which the surplus portions of the two separators are located either. The central portion of the case and the lower portion of the case are likely to be deformed as described above. Therefore, a high load is applied to the central portion of the case and the lower portion of the case from the case, and short-circuiting does not occur even in the regions in which the surplus portions of the two separators are located. However, as described above, the load that is applied to the electrode body by the upper portion of the case is lower than the load that is applied to the electrode body by the other regions. Therefore, the electrolytic solution is not sufficiently squeezed out from the upper portion of the electrode body. In particular, since the upper R portion of the electrode body is unlikely to be pressed, short-circuiting occurs at the upper R portion of the electrode body.

### SUMMARY OF THE INVENTION

The invention has been made in view of the foregoing circumstances, and provides a method of manufacturing a non-aqueous electrolyte secondary battery that can suppress the occurrence of short-circuiting in a high-temperature aging process.

According to one aspect of the invention, there is provided a method of manufacturing a non-aqueous electrolyte secondary battery that is equipped with an electrode body that has a positive electrode, a negative electrode and a plurality of separators. An upper R portion of the electrode body is curved. The respective separators have surplus portions that are in contact with neither the positive electrode nor the negative electrode at terminal ends thereof. The case has an accommodation portion and a lid portion. The accommodation portion is a container that has an opening in an upper face thereof and accommodates the electrode body. The lid portion is a member that closes up the opening in the upper face of the accommodation portion. The method includes a process of forming positive electrode mixture layers on both faces of the positive electrode current collector of the positive electrode respectively, a process of forming negative electrode mixture layers on both faces of the negative electrode current collector of the negative electrode respectively, a process of arranging the negative electrode outside the positive electrode in the electrode body, and a process of winding the positive electrode, the negative electrode and the plurality of separators; The method, furthermore, includes an initial charging process and a high-temperature aging process. In the initial charging precess, the non-aqueous electrolyte secondary battery is charged while being bound such that the electrode body is pressed via the accommodation portion of the case, with the surplus portions of the plurality of the separators not located at the upper R portion of the electrode body. In the high-temperature aging process, the non-aqueous electrolyte secondary battery that has been subjected to the initial charging process is maintained for a predetermined high temperature. It should be noted herein that the predetermined high temperature in the high-temperature aging process is also preferably equal to or higher than 60 degrees Celsius.

Besides, in the method of manufacturing the non-aqueous electrolyte secondary battery, it is preferable that the non-aqueous electrolyte secondary battery be further equipped with a pair of current collector terminals and a spacer, that the pair of the current collector terminals be fixed to an outer peripheral face of the electrode body, and that the spacer be provided between the outer peripheral face of the electrode body and an inner face of the accommodation portion of the case, and be arranged in such a manner as to sandwich the electrode body together with the pair of the current collector terminals.

Besides, in the method of manufacturing the non-aqueous electrolyte secondary battery, it is preferable that the non-aqueous electrolyte secondary battery be further equipped with a spacer film that is arranged between an outer peripheral face of the electrode body and an inner face of the accommodation portion of the case, and that a thickness of the spacer film be set equal to or larger than a predetermined value. It should be noted herein that it is also preferable that the predetermined value of the thickness of the spacer film be a value larger than 50 µm. Furthermore, it is also preferable that this predetermined value be substantially 200 µm.

The method of manufacturing the non-aqueous electrolyte secondary battery according to the invention as described above makes it possible to suppress the occurrence of short-circuiting in the high-temperature aging process.

### BRIEF DESCRIPTION OF THE DRAWINGS

Features, advantages, and technical and industrial significance of an exemplary embodiment of the invention will be described below with reference to the accompanying drawings, in which like numerals denote like elements, and wherein:
FIG 1 is a view showing a non-aqueous electrolyte secondary battery according to the embodiment of the invention;
FIG. 2 is a view showing the configuration of an electrode body of the non-aqueous electrolyte secondary battery;
FIG. 3 is a view showing a pair of current collector terminals that are fixed to the electrode body of the non-aqueous electrolyte secondary battery;
FIG. 4 is a view showing a manufacturing process of the non-aqueous electrolyte secondary battery according to the embodiment of the invention;
FIG 5 is a schematic view showing a position of surplus portions of separators in the electrode body of the non-aqueous electrolyte secondary battery;
FIG. 6 is a view showing the non-aqueous electrolyte secondary battery that is bound in an initial charging process of the non-aqueous electrolyte secondary battery;
FIG. 7 is a schematic view showing a position of the surplus portion of the separator in the electrode body of the non-aqueous electrolyte secondary battery;
FIG. 8 is a view showing a spacer that is provided inside a case of the non-aqueous electrolyte secondary battery;
FIG 9 is a view showing spacer films that are provided inside the case of the non-aqueous electrolyte secondary battery;
FIG. 10 is a cross-sectional view showing the configuration of an electrode body of a non-aqueous electrolyte secondary battery according to the related art;
FIG. 11 is a perspective view showing the configuration of the electrode body of the non-aqueous electrolyte secondary battery according to the related art;
FIG 12 is a view showing the turnaround of lithium ions in the non-aqueous electrolyte secondary battery according to the related art;
FIG. 13 is a view showing a region in which a surplus portion of a separator is arranged in the electrode body according to the related art; and
FIG. 14 is a view showing the non-aqueous electrolyte secondary battery according to the related art that is bound in an initial charging process of the non-aqueous electrolyte secondary battery according to the related art.

### DETAILED DESCRIPTION OF EMBODIMENT

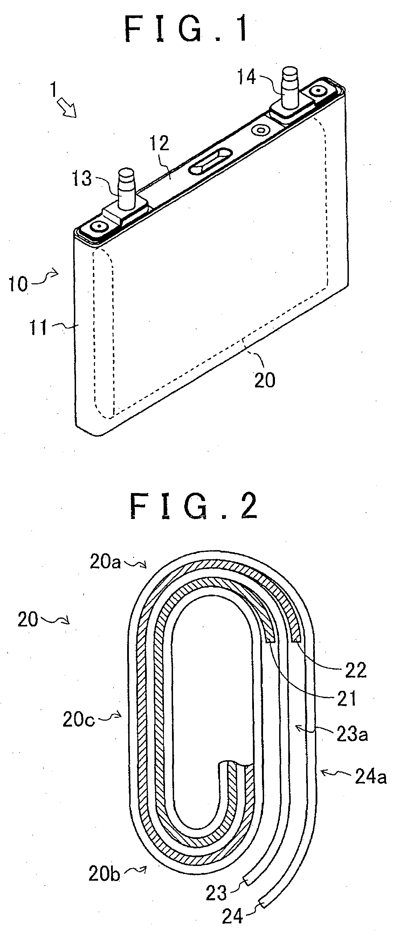

A battery 1 as one embodiment of a non-aqueous electrolyte secondary battery according to the invention will be described hereinafter with reference to FIGS. 1 to 3. Incidentally, for the convenience of explanation, the vertical direction in FIG. 1 is defined as the vertical direction of the battery 1.

As shown in FIG 1, the battery 1 is equipped with a case 10 that substantially assumes the shape of a rectangular parallelepiped, and an electrode body 20 that is accommodated inside the case 10. The battery 1 is configured as a so-called rectangular lithium-ion secondary battery.

The case 10 is a container that substantially assumes the shape of a rectangular parallelepiped, and is made of an aluminum alloy or the like. The case 10 has an accommodation portion 11 that has an opening in an upper face thereof, and a lid portion 12 that closes up the opening in the upper face of the accommodation portion 11.

The accommodation portion 11 is a housing that substantially assumes the shape of a rectangular parallelepiped, and has an opening in an upper face thereof. The electrode body 20 is accommodated inside the accommodation portion 11.

The lid portion 12 is a flat plate that assumes a shape corresponding to the opening in the upper face of the accommodation portion 11, and is bonded to the accommodation portion 11 through welding. A positive electrode terminal 13 and a negative electrode terminal 14, which function as external terminals of the battery 1, are fixed to the lid portion 12.

The electrode body 20 is fabricated by stacking a pair of sheet-like electrodes via a plurality of separators and winding them. The electrode body 20 functions as a power generation element by being impregnated with an electrolytic solution.

As shown in FIG. 2, the electrode body 20 is flatly formed in such a manner as to have an upper R portion 20a as an upper curved region, a lower R portion 20b as a lower curved region, and a flat portion 20c as a flat region that continues to the upper R portion 20a and the lower R portion 20b.

The electrode body 20 is equipped with a positive electrode 21 and a negative electrode 22 as the pair of the electrodes, and a first separator 23 and a second separator 24 as the plurality of the separators, and is configured such that the second separator 24, the negative electrode 22, the first separator 23, and the positive electrode 21 are arranged in this order from the outside. In the electrode body 20, the negative electrode 22 as one of the positive electrode 21 and the negative electrode 22 is arranged at an outermost periphery, and an outermost peripheral region of the negative electrode 22 is covered at least with the second separator 24.

The positive electrode 21 is an electrode that is equipped with a sheet-like positive electrode current collector, and positive electrode mixture layers that are formed on both faces of the positive electrode current collector respectively. The positive electrode current collector is a current collector that is formed of a metal foil of aluminum, titanium, stainless steel, or the like. Each of the positive electrode mixture layers is an electrode mixture layer that is formed of a positive electrode mixture including a positive electrode active material. The positive electrode mixture layers are formed except on parts of respective surfaces of the positive electrode current collector.

The negative electrode 22 is an electrode that is equipped with a sheet-like negative electrode current collector, and negative electrode mixture layers that are formed on both faces of the negative electrode current collector respectively. The negative electrode current collector is a current collector that is formed of a metal foil of copper, nickel, stainless steel, or the like. Each of the negative electrode mixture layers is an electrode mixture layer that is formed of a negative electrode mixture including a negative electrode active material. The negative electrode mixture layers are formed except on parts of respective surfaces of the negative electrode current collector, as is the case with the positive electrode mixture layers.

The first separator 23 is a separator that is formed of an insulator such as a polyolefin resin (e.g., polyethylene or polypropylene) or the like. The length of the first separator 23 in the winding direction thereof is longer than the length of the positive electrode 21 in the winding direction thereof, and is longer than the length of the negative electrode 22 in the winding direction thereof. Thus, when the first separator 23 is wound as part of the electrode body 20, a surplus portion 23a that is in contact with neither the positive electrode 21 nor the negative electrode 22 is created in a terminal end region of the first separator 23 in the winding direction thereof. The surplus portion 23a is arranged from the flat portion 20c of the electrode body 20 to the lower R portion 20b of the electrode body 20, so as not to be located at the upper R portion 20a of the electrode body 20.

The second separator 24 is a separator that is configured substantially in the same manner as the first separator 23. The length of the second separator 24 in the winding direction thereof is longer than the length of the positive electrode 21 in the winding direction thereof, and is longer than the length of the negative electrode 22 in the winding direction thereof. Thus, when the second separator 24 is wound as part of the electrode body 20, a surplus portion 24a that is in contact with neither the positive electrode 21 nor the negative electrode 22 is created in a terminal end region of the second separator 24 in the winding direction thereof. The surplus portion 24a is arranged from the flat portion 20c of the electrode body 20 to the lower R portion 20b of the electrode body 20, so as not to be located at the upper R portion 20a of the electrode body 20.

A terminal end of the surplus portion 24a of the second separator 24 is fixed to a middle portion of the second separator 24 in the winding direction thereof at the lower R portion 20b by an adhesive tape or the like, whereby the electrode body 20 is held in a wound state.

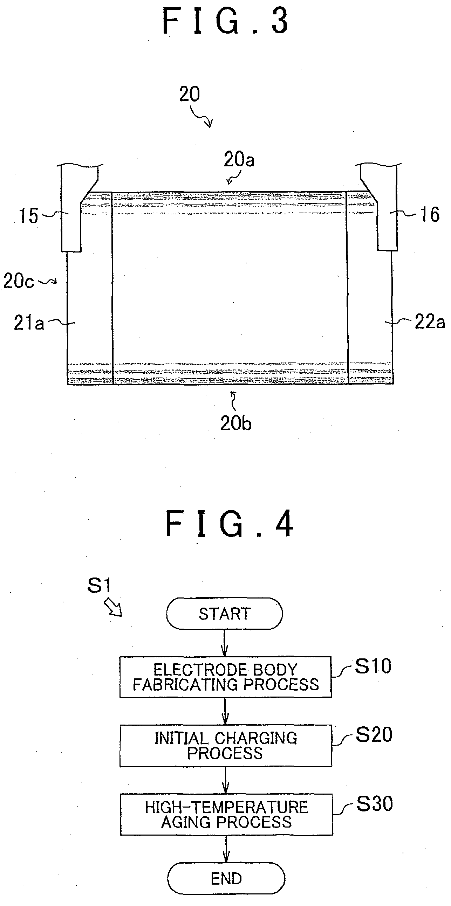

As shown in FIG. 3, in the electrode body 20, the positive electrode 21 and the negative electrode 22 are wound in a state of being mutually reversely displaced in a direction of a winding axis with respect to the first separator 23 and the second separator 24, such that a positive electrode non-support portion 21a as a region where the positive electrode mixture layers are not formed in the positive electrode current collector of the positive electrode 21, and a negative electrode non-support portion 22a as a region where the negative electrode mixture layers are not formed in the negative electrode current collector of the negative electrode 22 are exposed.

In the electrode body 20, a plate-like positive electrode current collector terminal 15 is fixed to the positive electrode non-support portion 21 a, and a plate-like negative electrode current collector terminal 16 is fixed to the negative electrode non-support portion 22a.

The positive electrode current collector terminal 15 is a plate material that has electrical conductivity and is formed in such a manner as to extend in a vertical direction. An upper end of the positive electrode current collector terminal 15 is fixed to a positive electrode connection member that is electrically connected to the positive electrode terminal 13 (not shown). A lower end of the positive electrode current collector terminal 15 is fixed to the positive electrode non-support portion 21a of the positive electrode 21. More specifically, the positive electrode current collector terminal 15 is arranged on one wide face side (on a near side of the sheet of FIG. 3) of the flat portion 20c of the electrode body 20, and the lower end of the positive electrode current collector terminal 15 is fixed to the positive electrode non-support portion 21a of the one wide face through welding or the like. In this manner, the positive electrode 21 of the electrode body 20 and the positive electrode terminal 13 are electrically connected to each other via the positive electrode current collector terminal 15 and the positive electrode connection member.

The negative electrode current collector terminal 16 is a plate material that is configured substantially in the same manner as the positive electrode current collector terminal 15. An upper end of the negative electrode current collector terminal 16 is fixed to a negative electrode connection member that is electrically connected to the negative electrode terminal 14 (not shown). A lower end of the negative electrode current collector terminal 16 is fixed to the negative electrode non-support portion 22a of the negative electrode 22. More specifically, the negative electrode current collector terminal 16 is arranged on one wide face side (on the near side of the sheet of FIG. 3) of the flat portion 20c of the electrode body 20, and the lower end of the negative electrode current collector terminal 16 is fixed to the negative electrode non-support portion 22a of the one wide face through welding or the like. In this manner, the negative electrode 22 of the electrode body 20 and the negative electrode terminal 14 are electrically connected to each other via the negative electrode current collector terminal 16 and the negative electrode connection member.

A manufacturing process S1 of the battery 1 as one embodiment of the method of manufacturing the non-aqueous electrolyte secondary battery according to the invention will be described hereinafter with reference to FIGS. 4 to 9.

As shown in FIG. 4, the manufacturing process S1 includes an electrode body fabricating process S10, an initial charging process S20, and a high-temperature aging process S30.

The electrode body fabricating process S10 is a process in which the electrode body 20 is fabricated. In the electrode body fabricating process S10, the electrode body 20 is fabricated by stacking the positive electrode 21, the negative electrode 22, the first separator 23, and the second separator 24 in a predetermined sequence, winding them, and then deforming this wound body into a flat shape.

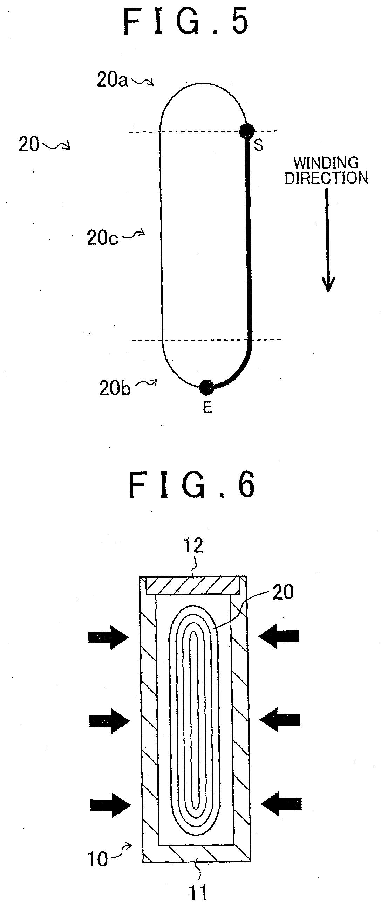

FIG. 5 is a schematic view showing the electrode body 20 that is fabricated in the electrode body fabricating process S10. In FIG. 5, a thick line indicates the surplus portion 23a of the first separator 23 and the surplus portion 24a of the second separator 24. Besides, a point S indicates leading ends of the surplus portions 23a and 24a in the winding direction thereof, and a point E indicates terminal ends of the surplus portions 23a and 24a in the winding direction thereof. As shown in FIG. 5, in the electrode body fabricating process S10, the electrode body 20 is fabricated such that the surplus portions 23a and 24a are arranged from the flat portion 20c of the electrode body 20 to the lower R portion 20b of the electrode body 20 instead of being located at the upper R portion 20a of the electrode body 20.

After being fabricated, the electrode body 20 is accommodated inside the case 10. Then, after an electrolytic solution is injected into the case 10, the initial charging process S20 is performed. Incidentally, an unfinished battery having the case 10 in which the electrode body 20 is accommodated and into which the electrolytic solution has been injected is referred to as "an intermediate product" for the sake of convenience.

The initial charging process S20 is a process in which the intermediate product is charged while being bound such that the electrode body 20 is pressed via the accommodation portion 11 of the case 10. As shown in FIG. 6, in the initial charging process S20, first of all, the intermediate product is bound by pressing two wide faces out of four lateral faces of the accommodation portion 11 of the case 10 through the use of a predetermined binding device, such that the electrode body 20 is pressed.

Then, the bound intermediate product is charged. At this time, since the surplus portions 23a and 24a are not arranged at the upper R portion 20a of the electrode body 20, lithium ions are restrained from turning around (see FIG. 12) from a positive electrode active material layer, which faces a negative electrode active material layer that is formed inside an outermost peripheral region of the negative electrode 22, to a negative electrode active material layer that is formed outside the outermost peripheral region of the negative electrode, via the electrolytic solution that has penetrated the surplus portions 23a and 24a, at the upper R portion 20a. An upper portion of the accommodation portion 11 of the case 10 is unlikely to be deformed by the lid portion 12 that is fixed through welding. Therefore, the load that is applied to the upper R portion 20a of the electrode body 20 is low, and it is difficult to sufficiently squeeze out the electrolytic solution from the first separator 23 and the second separator 24. However, since the surplus portions 23a and 24a are not arranged at the upper R portion 20a of the electrode body 20, lithium ions are not prompted to turn around as described above. On the other hand, the surplus portions 23a and 24a are arranged at the lower R portion 20b of the electrode body 20 and at the flat portion 20c of the electrode body 20, but the accommodation portion 11 is more likely to be deformed at the lower portion thereof and the central portion thereof than at the upper portion thereof. Thus, the electrolytic solution is sufficiently squeezed out from the surplus portions 23a and 24a that are located at the lower R portion 20b of the electrode body 20 and the flat portion 20c of the electrode body 20. As a result, lithium ions are not prompted to turn around as described above at the lower R portion 20b of the electrode body 20 and the flat portion 20c of the electrode body 20. In this manner, lithium ions can be restrained from turning around by refraining from arranging the surplus portions 23a and 24a at the upper R portion 20a of the electrode body 20.

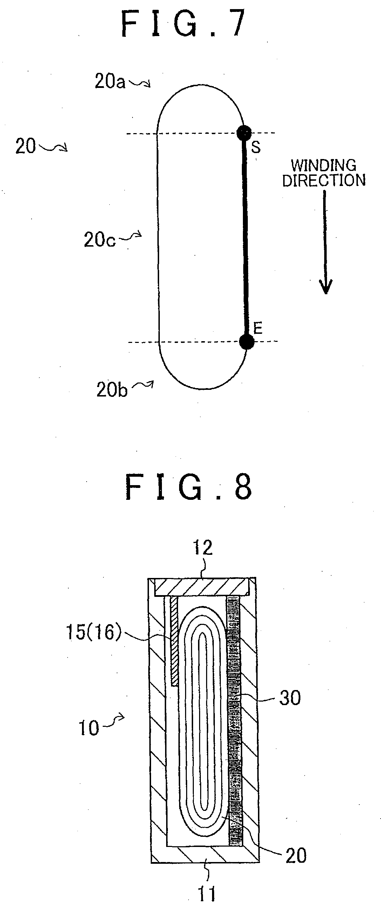

Incidentally, a load is slightly less likely to be applied to the lower R portion 20b of the electrode body 20 than to the flat portion 20c of the electrode body 20. Therefore, it is preferable not to arrange the surplus portions 23a and 24a at the lower R portion 20b either. For example, as shown in FIG. 7, it is appropriate to adjust the lengths of the surplus portions 23a and 24a, and ensure that the surplus portions 23a and 24a are arranged only at the flat portion 20c instead of being located at the upper R portion 20a of the electrode body 20 and at the lower R portion 20b of the electrode body 20. Thus, Lithium ions can further be restrained from turning around as described above. Incidentally, the configuration of the electrode body 20 is not restrictive, but is acceptable at least as long as the surplus portions 23a and 24a are not located at the upper R portion 20a of the electrode body 20.

Besides, it is preferable to interpose a predetermined member between the inner face of the accommodation portion 11 of the case 10 and the outer peripheral face of the electrode body 20. In this embodiment of the invention, it is preferable to interpose a predetermined member between the inner face of the wide face of the accommodation portion 11 of the case 10 and the wide face of the flat portion 20c of the electrode body 20. For example, as shown in FIG. 8, it is appropriate to arrange a plate-like spacer 30 as an insulator such as resin or the like on the other wide face side of the flat portion 20c of the electrode body 20 (on the other side of that face of the flat portion 20c of the electrode body 20 to which the positive electrode current collector terminal 15 and the negative electrode current collector terminal 16 are fixed), and fill a gap between the surface of the flat portion 20c and the inner face of the accommodation portion 11. That is, it is appropriate to arrange the spacer 30 such that the spacer 30 is sandwiched together with the positive electrode current collector terminal 15 and the negative electrode current collector terminal 16. Thus, the difference between the load that is applied from the positive electrode current collector terminal 15 side and the negative electrode current collector terminal 16 side to the electrode body 20 and the load that is applied from the spacer 30 side to the electrode body 20 can be reduced. Accordingly, the electrolytic solution can be well squeezed out from the first separator 23 and the second separator 24, so that lithium ions can further be restrained from turning around as described above. Incidentally, the size, thickness and the like of the spacer 30 may be appropriately changed in such a manner as to minimize the difference between the load that is applied from the positive electrode current collector terminal 15 side and the negative electrode current collector terminal 16 side to the electrode body 20 and the load that is applied from the spacer 30 side to the electrode body 20.

Besides, as shown in FIG. 9, in the case where spacer films 40 and 40 are provided inside the accommodation portion 11 of the case 10, it is also possible to set the thickness of each of the spacer films 40 (the lateral dimension of each of the spacer films 40 in FIG. 9) equal to or larger than a predetermined value. Each of the spacer films 40 is a thin insulating film that is provided between the inner face of the accommodation portion 11 of the case 10 and the outer peripheral face of the electrode body 20. The spacer films 40 are arranged in such a manner as to fill gaps between the wide faces of the flat portion 20c of the electrode body 20 on both sides thereof and the inner faces of the wide faces of the accommodation portion 11 that are opposed to the wide faces of the flat portion 20c respectively. By setting the thickness of each of the spacer films 40 to a value (e.g., 200 µm) larger than a conventional value (e.g., 50 µm), a load can be well applied to the electrode body 20 via the accommodation portion 11 of the case 10. Accordingly, the electrolytic solution can be well squeezed out from the first separator 23 and the second separator 24, so that lithium ions can further be restrained from turning around as described above. Incidentally, the thickness can also be adjusted by stacking a plurality of spacer films 40.

The high-temperature aging process S30 is a process in which the intermediate product that has been subjected to the initial charging process S20 is maintained at a high temperature. In the high-temperature aging process S30, the intermediate product that has been subjected to the initial charging process S20 is bound by the binding device, and is maintained at a high temperature (e.g., at a temperature equal to or higher than 60°C) for a predetermined period. As described above, in the initial charging process S20, lithium ions are restrained from turning around as described above. Therefore, the positive electrode active material layer of the positive electrode 21 is restrained from becoming locally high in potential, and from becoming unstable. Thus, even in the case where the intermediate product has been subjected to the high-temperature aging process S30, the positive electrode active material can be restrained from being eluted from the positive electrode active material layer of the positive electrode 21, and a metal constituting this positive electrode active material (e.g., Mn, Ni, or Co) can be restrained from being separated out on the negative electrode. Accordingly, the occurrence of short-circuiting in the high-temperature aging process S30 can be suppressed.

As described above, in the manufacturing process S1, the battery 1 is fabricated by being sequentially subjected to the electrode body fabricating process S10, the initial charging process S20, and the high-temperature aging process S30.

## Claims

1. A method of manufacturing a non-aqueous electrolyte secondary battery (1) that includes:
an electrode body (20) having a positive electrode (21), a negative electrode (22) and a plurality of separators, an upper R portion (20a) of the electrode body (20) being curved, the respective separators having surplus portions (23a,24a) that are in contact with neither the positive electrode (21) nor the negative electrode (22) at terminal ends of the respective separators (23,24);
a case (10) having an accommodation portion (11) and a lid portion (12), the accommodation portion (11) being a container that has an opening in an upper face of the container and accommodates the electrode body (20), and the lid portion (12) being a member that closes up the opening in the upper face of the accommodation portion (11), the method **characterized by** comprising:
forming positive electrode (21) mixture layers on both faces of the positive electrode (21) current collector of the positive electrode (21) respectively;
forming negative electrode (22) mixture layers on both faces of the negative electrode (22) current collector of the negative electrode (22) respectively;
arranging the negative electrode (22) outside the positive electrode (21) in the electrode body (20);
winding the positive electrode (21), the negative electrode (22) and the plurality of separators (23,24);
performing an initial charging process in which the non-aqueous electrolyte secondary battery (1) is charged while being bound such that the electrode body (20) is pressed via the accommodation portion (11) of the case (10), with the surplus portions (23a,24a) of the plurality of the separators (23,24) not located at the upper R portion (20a) of the electrode body (20); and
performing a high-temperature aging process in which the non-aqueous electrolyte secondary battery (1) that has been subjected to the initial charging process is maintained at a predetermined high temperature, wherein the predetermined high temperature in the high-temperature aging process is equal to or higher than 60 degrees Celsius.

2. The method of manufacturing the non-aqueous electrolyte secondary battery (1) according to claim 1 , wherein
the non-aqueous electrolyte secondary battery (1) is further equipped with a pair of current collector terminals and a spacer,
the pair of the current collector terminals are fixed to an outer peripheral face of the electrode body (20), and
the spacer is provided between the outer peripheral face of the electrode body (20) and an inner face of the accommodation portion (11) of the case (10), and is arranged in such a manner as to sandwich the electrode body (20) together with the pair of the current collector terminals.

3. The method of manufacturing the non-aqueous electrolyte secondary battery (1) according to claim 1 , wherein
the non-aqueous electrolyte secondary battery (1) is further equipped with a spacer film that is arranged between an outer peripheral face of the electrode body (20) and an inner face of the accommodation portion (11) of the case (10), and
a thickness of the spacer film is set equal to or larger than a predetermined value.

4. The method of manufacturing the non-aqueous electrolyte secondary battery (1) according to claim 3, wherein
the predetermined value of the thickness of the spacer film is a value larger than 50 µm.

5. The method of manufacturing the non-aqueous electrolyte secondary battery (1) according to claim 4, wherein
the predetermined value of the thickness of the spacer film is substantially 200 µm.

## Patentansprüche

1. Verfahren zum Herstellen einer wasserfreien Elektrolyt-Sekundärbatterie (1), die enthält:
einen Elektrodenkörper (20) mit einer positiven Elektrode (21), einer negativen Elektrode (22) und mehreren Separatoren, wobei ein oberer R-Abschnitt (20a) des Elektrodenkörpers (20) gekrümmt ist, wobei die jeweiligen Separatoren Überschussabschnitte (23a, 24a) haben, die weder mit der positiven Elektrode (21) noch mit der negativen Elektrode (22) an Anschlussenden der jeweiligen Separatoren (23, 24) in Kontakt stehen,
ein Gehäuse (10) mit einem Aufnahmeabschnitt (11) und einem Deckelabschnitt (12), wobei der Aufnahmeabschnitt (11) ein Behälter ist, der eine Öffnung in einer Oberseite des Behälters hat und den Elektrodenkörper (20) aufnimmt, und der Deckelabschnitt (12) ein Element ist, das die Öffnung in der Oberseite des Aufnahmeabschnitts (11) verschließt, wobei das Verfahren **dadurch gekennzeichnet ist, dass** es umfasst:
Bilden von Positivelektroden(21)-Mischschichten jeweils auf beiden Flächen des Positivelektroden(21)-Stromkollektors der positiven Elektrode (21),
Bilden von Negativelektroden(22)-Mischschichten jeweils auf beiden Flächen des Negativelektroden(22)-Stromkollektors der negativen Elektrode (22),
Anordnen der negativen Elektrode (22) außerhalb der positiven Elektrode (21) in dem Elektrodenkörper (20),
Aufwickeln der positiven Elektrode (21), der negativen Elektrode (22) und der mehreren Separatoren (23, 24),
Ausführen eines anfänglichen Ladeprozesses, bei dem die wasserfreie Elektrolyt-Sekundärbatterie (1) geladen wird, während sie so gebunden ist, dass der Elektrodenkörper (20) mittels des Aufnahmeabschnitts (11) des Gehäuses (10) gepresst wird, wobei sich die Überschussabschnitte (23a, 24a) der mehreren Separatoren (23, 24) nicht an dem oberen R-Abschnitt (20a) des Elektrodenkörpers (20) befinden, und
Ausführen eines Hochtemperatur-Alterungsprozesses, bei dem die wasserfreie Elektrolyt-Sekundärbatterie (1), die dem anfänglichen Ladeprozess unterzogen wurde, auf einer vorgegebenen hohen Temperatur gehalten wird, wobei die vorgegebene hohe Temperatur in dem Hochtemperatur-Alterungsprozess mindestens 60 Grad Celsius beträgt.

2. Verfahren zum Herstellen der wasserfreien Elektrolyt-Sekundärbatterie (1) nach Anspruch 1, wobei
die wasserfreie Elektrolyt-Sekundärbatterie (1) ferner mit einem Paar Stromkollektoranschlüsse und einem Abstandshalter ausgestattet ist,
das Paar der Stromkollektoranschlüsse an einer Außenumfangsfläche des Elektrodenkörpers (20) befestigt ist, und
der Abstandshalter zwischen der Außenumfangsfläche des Elektrodenkörpers (20) und einer Innenfläche des Aufnahmeabschnitts (11) des Gehäuses (10) angeordnet ist und in einer solchen Weise angeordnet ist, dass der den Elektrodenkörper (20) zusammen mit dem Paar der Stromkollektoranschlüsse zwischen sich aufnimmt.

3. Verfahren zum Herstellen der wasserfreien Elektrolyt-Sekundärbatterie (1) nach Anspruch 1, wobei
die wasserfreie Elektrolyt-Sekundärbatterie (1) ferner mit einem Abstandshalterfilm ausgestattet ist, der zwischen einer Außenumfangsfläche des Elektrodenkörpers (20) und einer Innenfläche des Aufnahmeabschnitts (11) des Gehäuses (10) angeordnet ist, und
eine Dicke des Abstandshalterfilms auf mindestens einen vorgegebenen Wert eingestellt wird.

4. Verfahren zum Herstellen der wasserfreien Elektrolyt-Sekundärbatterie (1) nach Anspruch 3, wobei
der vorgegebene Wert der Dicke des Abstandshalterfilms ein Wert größer als 50 µm ist.

5. Verfahren zum Herstellen der wasserfreien Elektrolyt-Sekundärbatterie (1) nach Anspruch 4, wobei
der vorgegebene Wert der Dicke des Abstandshalterfilms im Wesentlichen 200 µm beträgt.

## Revendications

1. Procédé de fabrication d'une batterie secondaire à électrolyte non aqueux (1) qui comprend :
un corps d'électrode (20) ayant une électrode positive (21), une électrode négative (22) et une pluralité de séparateurs, une partie R supérieure (20a) du corps d'électrode (20) étant courbée, les séparateurs respectifs ayant des parties en surplus (23a, 24a) qui ne sont en contact ni avec l'électrode positive (21) ni avec l'électrode négative (22) aux extrémités terminales des séparateurs respectifs (23, 24) ;
un boîtier (10) ayant une partie de réception (11) et une partie de couvercle (12), la partie de réception (11) étant un réceptacle qui a une ouverture dans une face supérieure du réceptacle et reçoit le corps d'électrode (20), et la partie de couvercle (12) étant un élément qui ferme l'ouverture dans la face supérieure de la partie de réception (11), le procédé étant **caractérisé en ce qu'**il comporte le fait de :
former des couches de mélange d'électrode positive (21) sur les deux faces du collecteur de courant d'électrode positive (21) de l'électrode positive (21) respectivement ;
former des couches de mélange d'électrode négative (22) sur les deux faces du collecteur de courant d'électrode négative (22) de l'électrode négative (22) respectivement ;
disposer l'électrode négative (22) à l'extérieur de l'électrode positive (21) dans le corps d'électrode (20) ;
enrouler l'électrode positive (21), l'électrode négative (22) et la pluralité de séparateurs (23, 24) ;
réaliser un processus de charge initiale dans lequel la batterie secondaire à électrolyte non aqueux (1) est chargée tout en étant liée de telle sorte que le corps d'électrode (20) est pressé par l'intermédiaire de la partie de réception (11) du boîtier (10), alors que les parties en surplus (23a, 24a) de la pluralité de séparateurs (23, 24) ne se trouvent pas au niveau de la partie R supérieure (20a) du corps d'électrode (20) ; et
réaliser un processus de vieillissement à haute température dans lequel la batterie secondaire à électrolyte non aqueux (1) qui a été soumise au processus de charge initiale est maintenue à une température élevée prédéterminée, la température élevée prédéterminée dans le processus de vieillissement à haute température étant égale ou supérieure à 60 degrés Celsius.

2. Procédé de fabrication de la batterie secondaire à électrolyte non aqueux (1) selon la revendication 1, selon lequel
la batterie secondaire à électrolyte non aqueux (1) est en outre équipée d'une paire de bornes de collecteur de courant et d'une entretoise,
la paire de bornes de collecteur de courant est fixée sur une face périphérique extérieure du corps d'électrode (20), et
l'entretoise est prévue entre la face périphérique extérieure du corps d'électrode (20) et une face intérieure de la partie de réception (11) du boîtier (10), et est disposée de manière à enserrer le corps d'électrode (20) avec la paire de bornes de collecteur de courant.

3. Procédé de fabrication de la batterie secondaire à électrolyte non aqueux (1) selon la revendication 1, selon lequel
la batterie secondaire à électrolyte non aqueux (1) est en outre équipée d'un film d'entretoise qui est disposé entre une face périphérique extérieure du corps d'électrode (20) et une face intérieure de la partie de réception (11) du boîtier (10), et
une épaisseur du film d'entretoise est prévue égale ou supérieure à une valeur prédéterminée.

4. Procédé de fabrication de la batterie secondaire à électrolyte non aqueux (1) selon la revendication 3, selon lequel
la valeur prédéterminée de l'épaisseur du film d'entretoise est une valeur supérieure à 50 µm.

5. Procédé de fabrication de la batterie secondaire à électrolyte non aqueux (1) selon la revendication 4, selon lequel
la valeur prédéterminée de l'épaisseur du film d'entretoise est sensiblement de 200 µm.
